# EUROPEAN PATENT SPECIFICATION

(11) **EP 3 975 527 B1**
(45) Date of publication and mention of the grant of the patent: **01.05.2024**
(21) Application number: 20833219.7
(22) Date of filing: 19.06.2020
(51) Int. Cl.: H04M 1/02, G06F 1/16, G02F 1/1335, H04N 23/55

(54) **ELECTRONIC DEVICE WITH A DISPLAY AND A COVER ASSEMBLY.**
ELEKTRONISCHES GERÄT MIT EINEM DISPLAY UND EINER ABDECKUNGSEINHEIT.
DISPOSITIF ÉLECTRONIQUE AVEC UN ÉCRAN ET UN ENSEMBLE DE COUVERTURE.

(30) Priority: 28.06.2019 CN 201921005270 U; 28.06.2019 CN 201910576745
(43) Date of publication of application: 30.03.2022
(73) Proprietor: GUANGDONG OPPO MOBILE TELECOMMUNICATIONS CORP., LTD., Wusha, Chang'an Dongguan Guangdong 523860 (CN)
(72) Inventor: WEI, Yi, Dongguan, Guangdong 523860 (CN); ZHANG, Haiyu, Dongguan, Guangdong 523860 (CN); XIE, Zhong, Dongguan, Guangdong 523860 (CN)
(74) Representative: Ipside
(86) International application number: PCT/CN2020/097059
(87) International publication number: WO 2020/259404

(56) References cited:
- CN-A- 108 628 043
- CN-A- 108 681 131
- CN-A- 109 541 833

## Description

### TECHNICAL FIELD

The present disclosure relates to the field of structures of electronic devices, and in particular to an electronic device.

### BACKGROUND

As customers demand an increased screen-to-body ratio of electronic devices, developers have proposed solutions to improve the screen-to-body ratio of electronic devices, such as a narrow bezel, a Notch design for the screen, a water-drop design for the screen, a perforated design for the screen (including a through-hole and a blind hole). Further, the developers also configure an expansion-retraction mechanism with a front camera in a traditional structure. Alternatively, the developers provide dual screens and a rear camera only, where the rear camera may be used as both a front camera and the rear camera. Although the above structures may improve the screen-to-body ratio to some extent to improve integrity of the device, in order to further meet the requirements of the customers, the screen-to-body ratio of the electronic device needs to be further increased.

The Chinese patent application No. CN108628043A discloses a screen component and an electronic device. The screen component comprises a liquid crystal display screen and a sealing member, the liquid crystal display screen has a display area and comprises a first through hole penetrating the display area, a camera is arranged in the first through hole, the sealing member is arranged between the camera and the inner wall of the first through hole to form sealing connection between the inner wall of the first through hole and the camera so as to prevent leakage of liquid crystal molecules in the liquid crystal display screen, and the sealing member forms a light shading layer between the camera and the inner wall of the first through hole to block light from leaking towards the camera.

The Chinese patent application No. CN108681131A discloses a display device. The display device comprises a cover plate and a display panel which are arranged oppositely; the display panel comprises a through hole, a first non-display area, a display area and a second non-display area; the through hole runs through the display panel along the thickness direction; the first non-display area surrounds the through hole; the display area surrounds the first non-display area; the second non-display area surrounds the display area; the positive projection of the cover plate on the plane on which the display area is covers the through hole; the display panel also comprises an upper polaroid; the upper polaroid is positioned on one side, near the cover plate, of the display panel; and a shading material is arranged on the surface of one side, near the through hole, of the upper polaroid. The display device provided by the invention can effectively improve the light leakage problem of the display panel and improve the shooting effect of photosensitive devices such as a camera while increasing the screen-to-body ratio of the display panel.

The Chinese patent application No. CN109541833A discloses a display assembly, a display device, and a driving method thereof, and relates to the technical field of displaying. Light leakage can be overcome. The display assembly comprises a display panel comprising an array substrate and an opposite substrate, the display panel further comprises a display area which comprises a pixel area, a light transmission area, and alight shading area. The side, away from the opposite substrate, of the array substrate is provided with a first light shading pattern which is located in the light shading area and disposed around the light transmitting area.

### SUMMARY OF THE DISCLOSURE

According to an aspect of the present disclosure, an electronic device is provided as set out in the appended set of claims.

### BRIEF DESCRIPTION OF THE DRAWINGS

In order to make the technical solution described in the embodiments of the present disclosure more clear, the drawings used for the description of the embodiments will be briefly described. Apparently, the drawings described below only illustrate some embodiments, an ordinary skilled person in the art may obtain other drawings based on these drawings, without making any creative work.
FIG. 1 is a structural schematic view of an electronic device according to an embodiment in related art.
FIG. 2 is a structural schematic view of an electronic device according to an embodiment of the present disclosure.
FIG. 3 is a structural schematic view of a diaphragm shown in FIG. 2.
FIG. 4 is another structural schematic view of a diaphragm shown in FIG. 2.
FIG. 5 is another structural schematic view of a diaphragm shown in FIG. 2.
FIG. 6 shows a principle of forming the diaphragm shown in FIG. 2.
FIG. 7 is a structural schematic view of a top view of a camera assembly shown in FIG. 2.
FIG. 8 is a structural schematic view of another top view of a camera assembly shown in FIG. 2.
FIG. 9 is a structural schematic view of a top view of a display screen shown in FIG. 2.
FIG. 10 is a structural schematic view of a top view of an electronic device shown in FIG. 2.
FIG. 11 is a structural schematic view of another top view of the display screen shown in FIG. 2.
FIG. 12 is a structural schematic view of another top view of the display screen shown in FIG. 2.
FIG. 13 is a structural schematic view of another top view of an electronic device shown in FIG. 2.
FIG. 14 is a structural schematic view of another top view of an electronic device shown in FIG. 2.
FIG. 15 is a structural schematic view of another electronic device according to an embodiment of the present disclosure.
FIG. 16 is a structural schematic view of another electronic device according to an embodiment of the present disclosure.
FIG. 17 is a flow chart of manufacturing a transparent cover shown in FIG. 16.
FIG. 18 is structural schematic view of the transparent cover shown in FIG. 16.
FIG. 19 is structural schematic view of a top view of the transparent cover shown in FIG. 16.
FIG. 20 is a structural schematic view of an electronic device according to another embodiment in the art.
FIG. 21 is a structural schematic view of another electronic device according to an embodiment of the present disclosure.
FIG. 22 is structural schematic view of a top view of the electronic device shown in FIG. 21.
FIG. 23 is structural schematic view of a top view of the display screen shown in FIG. 21.
FIG. 24 is structural schematic view of another top view of the display screen shown in FIG. 21.
FIG. 25 is structural schematic view of another top view of the display screen shown in FIG. 21.
FIG. 26 is a structural schematic view of another electronic device according to an embodiment of the present disclosure.
FIG. 27 is a structural schematic view of another electronic device according to an embodiment of the present disclosure.
FIG. 28 is a structural schematic view of another electronic device according to an embodiment of the present disclosure.
FIG. 29 is a structural schematic view of another electronic device according to an embodiment of the present disclosure.
FIG. 30 is a structural schematic view of another electronic device according to an embodiment of the present disclosure.
FIG. 31 is a structural schematic view of another electronic device according to an embodiment of the present disclosure.
FIG. 32 is a structural schematic view of another electronic device according to an embodiment of the present disclosure.
FIG. 33 is a side view of a partial structure of the electronic device according to another embodiment of the present disclosure.
FIG. 34 is a side view of a partial structure of the electronic device according to still another embodiment of the present disclosure.
FIG. 35 is a flow chart of a method for assembling an electronic device according to an embodiment of the present disclosure.
FIG. 36 is a flow chart of a method for assembling an electronic device according to another embodiment of the present disclosure.

### DETAILED DESCRIPTION

To be noted that the "electronic device" in the present disclosure includes, but is not limited to, a device configured to receive/send communication signals via a wireline connection (e.g., via a public switched telephone network (PSTN), a digital subscriber line (DSL), a digital cable, direct cable connection, and/or another data connection/network) and/or via a wireless interface (e.g., for a cellular network, a wireless Local Area Network (WLAN), digital TV networks such as DVB-H networks, satellite networks, AM-FM broadcast transmitters, and/or another communication terminals). For example, the electronic device may be a smart phone, a tablet computer, a laptop computer, a wearable device, and the like.

Technical solutions of the present disclosure are substantially to improve the full-screen structure of the electronic device, such as the electronic device having a narrow bezel, a Notch design for the screen, a water-drop design for the screen and a hole design for the screen, to further narrow a black edge of the screen (the black edge may be formed due to configuration of a front camera), such that a higher screen-to-body ratio may be achieved. During a long-term research, the applicant discovers that, in the full-screen structures such as the narrow bezel, the Notch design for the screen, the water-drop design for the screen and a mesh screen, the black edge of the screen may be formed substantially by a diameter of a hole in a light-transmitting region, a width of wirings in the display screen, a distance between the display screen and the camera for assembling, and a distance between a middle frame and the camera for assembling, and the like. According to the present disclosure, the diameter of the hole in the light-transmitting region and the width of the wirings in the display screen may be narrowed.

The present disclosure is to be described in further detail below by referring to the accompanying drawings and embodiments. To be particularly noted that the following embodiments are used only to illustrate the present disclosure, but do not limit the scope of the present disclosure. Similarly, the following embodiments are only some, but not all, of the embodiments of the present disclosure. All other embodiments obtained by an ordinary skilled person in the art without making creative work shall fall within the scope of the present disclosure.

In the present disclosure, an "embodiment" indicates that a particular feature, a particular structure, or characteristic described in an embodiment may be included in at least one embodiment of the present disclosure. The word used at various sections in the specification does not necessarily mean the same embodiment, and does not mean a separate or an alternative embodiment that is mutually exclusive with other embodiments. The ordinary skilled person in the art shall explicitly and implicitly understand that the embodiments described herein may be combined with other embodiments.

To be noted that, the present disclosure may describe electronic devices having full-screen structures with a narrow bezel, a notch design, a waterdrop design and the like.

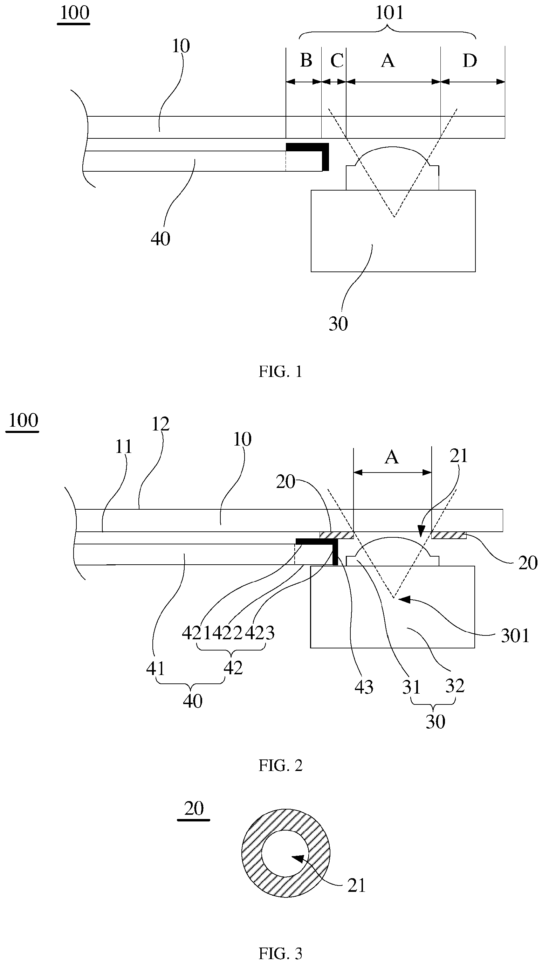

During the long-term research, the applicant discovers that, in a full-screen structure having a narrow bezel, a notch design and a water-drop design, a black edge 101 of the screen is formed substantially by a diameter A of a hole in a light-transmitting region, a width B (about 0.9mm) of wires in a display screen 40, a distance (about 0.15mm) between the display screen 40 and a camera module 30 for assembling, and a distance D (about 0.5mm) between a middle frame and the camera module 30. In detail, as shown in FIG. 1, FIG. 1 is a structural schematic view of an electronic device 100 according to an embodiment in related art.

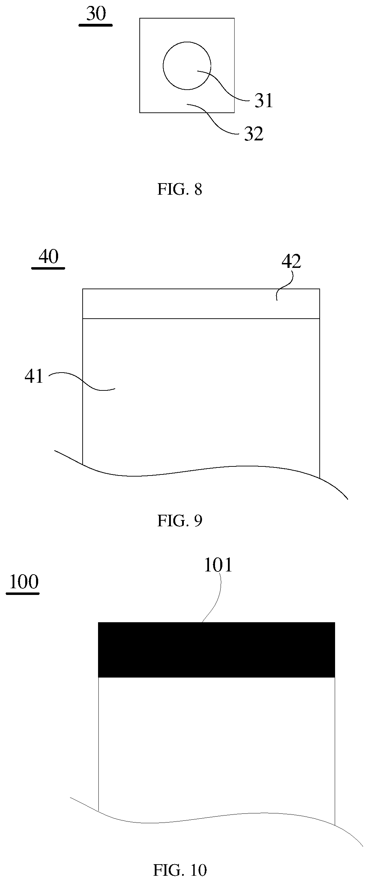

As shown in FIG. 2 and FIG. 10, FIG. 2 is a structural schematic view of the electronic device 100 according to an embodiment of the present disclosure, and FIG. 10 is a structural schematic view of a top view of the electronic device 100 shown in FIG. 2. The electronic device 100 includes a transparent cover 10, a diaphragm structure 20 and a camera module 30. The transparent cover 10 includes a first surface 11 and a second surface 12 opposite to the first surface 11. The diaphragm structure 20 is a screen-printing ink layer disposed on the first surface 11 of the transparent cover 10. The diaphragm structure 20 defines a light-transmitting hole 21. The camera module 30 and the diaphragm structure 20 are disposed on a same side of the transparent cover 10. The camera module 30 is disposed corresponding to the light-transmitting hole 21. The camera module 30 corresponding to the light-transmitting hole may be interpreted as the camera module 30 facing the light-transmitting hole 21 directly, or a central axis of a light inlet hole of a lens of the camera module 30 being coaxial with a central axis of the light-transmitting hole 21, or a difference between the central axis of the light inlet hole of the lens of the camera module 30 and the central axis of the light-transmitting hole 21 being within a certain range (to be described in detail hereinafter). The diaphragm structure 20 is configured to limit a range of light entering the camera module 30. The light passes through the transparent cover 10 and the light-transmitting hole 21 successively to enter the camera module 30. In the present embodiment, the diaphragm structure 20 and the transparent cover 10 serve as a cover assembly. Alternatively, the light-transmitting hole 21 may be a circular hole. A diameter of the light-transmitting hole 21 is less than a diameter of the light inlet hole of the lens of the camera module 30, such that the light-transmitting hole 21 may enable the diaphragm to limit the range of the light. To be noted that, the terms "includes", "has" and any variations thereof in the present disclosure are intended to cover non-exclusive inclusion. In addition, description of the electronic device 100 and the components thereof in the present embodiment only illustrates structural components that are related to the present disclosure, some other structural components of the electronic device 100 (such as a housing, circuit boards, and the like) will not be specifically described herein.

In an aspect, the screen-printing ink layer is configured on the transparent cover 10 of the electronic device 100. The screen-printing ink layer serves as the diaphragm structure 20 of the camera module 30. In this way, a thickness of the camera module 30 may be reduced, and therefore, a distance between a principal point of photograph 301 of the camera module 30 and the transparent cover 10 may be reduced. As the diaphragm structure 20 is disposed on the transparent cover 10, when a field of view angle (an angle between the principal point of photograph 301 and a diameter of the field of view) remains unchanged, the diameter of the field of view is reduced, and the diameter of the field of view is equal to the diameter A of the hole of the light-transmitting region. Therefore, the diameter A of the hole of the light-transmitting region is reduced, the width of the black edge 101 of the screen is reduced, and the screen-to-body ratio is increased. In another aspect, disposing the diaphragm structure 20 on the transparent cover 10 reduces the width of the camera module 30, such that the width of the black edge 101 of the screen is reduced, and the screen-to-body ratio is increased.

Alternatively, the electronic device 100 further includes a display screen 40. The display screen 40 and the camera module 30 are disposed side-by-side. The "side-by-side" herein may refer to a side of the camera module 30 being adjacent to a side of the display screen 40, or at least a part of the camera module 30 overlapping with the display screen 40 on an extension plane of the display screen 40. The display screen 40, the diaphragm structure 20, and the transparent cover 10 may cooperatively serve as the display apparatus.

The display screen 40 includes a display region 41 and a non-display region 42. The display region 41 and the non-display region 42 are adjacent to each other. Alternatively, the display region 41 partially surrounds the non-display region 42. The camera module 30 includes a body portion 32 and a lens portion 31. A projection of the non-display region 42 on the transparent cover 10 at least partially overlaps with a projection of the body portion 32 on the transparent cover 10.

Material of the transparent cover 10 may be transparent glass or resin. The first surface 11 of the transparent cover 10 is received inside the electronic device 100. The second surface 12 of the transparent cover 10 serves as an outer surface of the electronic device 100 and may be configured to receive a sliding operation of a user.

The diaphragm structure 20 is substantially configured to limit the range of the light entering the camera module 30. In the related art, the diaphragm structure 20 is substantially configured as a part of the camera module 30 and disposed on the camera module 30. In the present embodiment, the diaphragm structure 20 may be the screen-printing ink layer printed on the first surface 11 of the transparent cover 10. Alternatively, the diaphragm structure 20 may be a black screen-printing ink layer. Alternatively, a thickness of the diaphragm structure 20 may be in a range of 80um to 200um. For example, the thickness of the diaphragm structure 20 may be one of 80um, 120um, 150um, 180um, and 200um. When the thickness of the diaphragm structure 20 is excessively small, the diaphragm structure 20 cannot limit the range of the light. When the thickness of the diaphragm structure 20 is excessively large, a thinness of the electronic device 100 may not be reduced. Further, the thickness of the diaphragm structure 20 may be between 80um and 150um.

As the diaphragm structure 20 is configured as a part of a camera optical system for imaging, in order to ensure quality of the imaging, the difference between the central axis of the light-transmitting hole 21 and the central axis of the lens of the camera module 30 may be less than or equal to 0.005mm. Further, the difference between the central axis of the light-transmitting hole 21 and the central axis of the lens of the camera module 30 may be less than or equal to 0.001mm. Alternatively, the light-transmitting hole 21 may be a circular hole, and concentricity of the light-transmitting hole 21 may be less than or equal to 0.005mm. Further, the concentricity of the light-transmitting hole 21 may be configured to be less than or equal to 0.001mm to ensure quality of imaging.

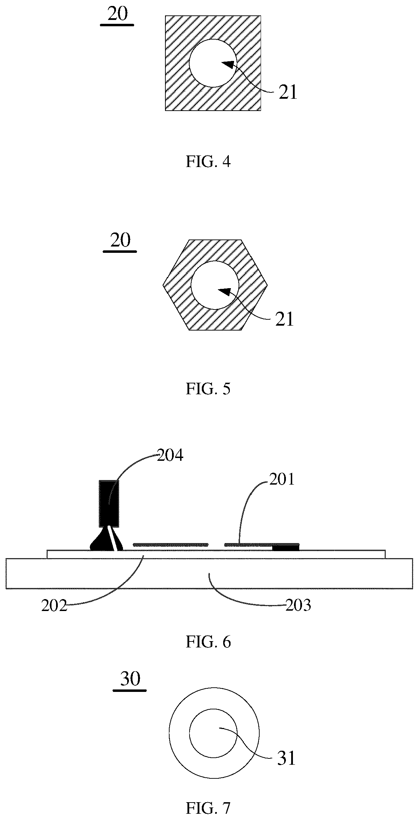

The present embodiment does not limit a shape of the diaphragm structure 20. For example, the diaphragm structure 20 may be ring-shaped, as shown in FIG. 3, which shows a structural schematic view of the diaphragm structure 20 shown in FIG. 2. The diaphragm structure 20 may be a square-shaped structure having a through hole, as shown in FIG. 4, which shows another structural schematic view of the diaphragm structure 20 shown in FIG. 2. The diaphragm structure 20 may be a polygon having a through hole, as shown in FIG. 5, which shows another structural schematic view of the diaphragm structure 20 shown in FIG. 2.

To print and form the diaphragm structure 20, ink may pass through holes in a graphic portion of a screen-printing plate 201, and the ink may not pass through holes in a non-graphic portion of the screen-printing plate 201. As shown in FIG. 6, FIG. 6 shows a principle of forming the diaphragm structure 20 shown in FIG. 2. A silk screen cloth is taut on a screen frame to form the screen-printing plate 201. While printing, a printing substrate 202 is placed on a printing table 203, and the screen-printing plate 201 is placed on the printing substrate 202. The ink is poured to an end of the screen-printing plate 201. A scraping plate 204 is configured to apply a certain pressure on a position of the screen-printing plate 201 that has the ink, and moves to the other end of the screen-printing plate 201. While moving the scraping plate 204, the scraping plate 204 squeezes the ink onto the printing substrate 202 from the holes of the graphic portion. To be noted that all directional indications (such as up, down, left, right, forward, backward, ...) in the present embodiment are used only to explain relative position relationship, relative movement, and the like, between various components in a particular pose (as shown in the drawings). When the particular pose is changed, the directional indications may be changed accordingly.

To be noted that, by improving accuracy of the screen-printing plate 201 and uniformity of the scraping plate 204, accuracy of the diaphragm structure 20 may be improved, and the concentricity of the light-transmitting hole 21 may be improved. In another aspect, a charge-coupled device (CCD) may be configured to align the camera module 30 with the diaphragm structure 20 to reduce an assembly tolerance between the camera module 30 and the diaphragm structure 20, allowing the central axis of the light-transmitting hole 21 to be close to the central axis of the lens of the camera module 30 as much as possible, where the central axis of the light-transmitting hole 21 may coincide with the central axis of the lens of the camera module 30.

The camera module 30 may be disposed corresponding to the light-transmitting hole 21 of the diaphragm structure 20. The lens of the camera module 30 may be disposed close to the diaphragm structure 20 as much as possible. The camera module 30 may be a fixed-focus camera module or an auto-focusing camera module. Alternatively, in the present embodiment, the camera module 30 is the fixed-focus camera module. To be noted that when the camera module 30 is the auto-focusing camera module (the body portion 32 drives the lens portion 31 to extend and retract in a direction perpendicular to the transparent cover 10), the body portion 32 needs to avoid the display screen 40.

In the present embodiment, the camera module 30 is a small-head camera. In detail, the camera module 30 may include the lens portion 31 and the body portion 32. The lens portion 31 is disposed close to the diaphragm structure 20, and the body portion 32 supports the lens portion 31. Further, a size of the lens portion 31 is smaller than a size of the body portion 32. The size of the lens portion 31 of the camera module 30 is smaller than the size of the lens portion 31 of the camera module 30 in the related art. This is because, in the present embodiment, the diaphragm structure 20 is disposed on the transparent cover 10. In the art, the diaphragm structure 20 may be configured as a part of the camera module 30 and provided on the camera module 30. Disposing the diaphragm structure 20 on the transparent cover 10 may reduce a thickness and a width of the lens portion 31 of the camera module 30.

Alternatively, detailed optical parameters of the camera module 30 may be as follows. An optical size of an image sensor (cmos sensor) may be 1/2.8 inch. A field of view may be 80 degrees. An aperture value may be 2.2. The thickness of the lens (a total length of the lens, TTL) may be 4.55 mm. The lens portion 31 of the camera module 30 may be a circular cylinder, having a diameter of less than 3mm. To be noted that, in the related art, the diameter of the lens portion 31 of the camera module 30 may generally be greater than 3mm.

Alternatively, each of the lens portion 31 and the body portion 32 may be a circular cylinder. As shown in FIG. 7, FIG. 7 is a structural schematic view of a top view of the camera assembly 30 shown in FIG. 2. It should be understood that, the lens portion 31 may be the circular cylinder, and the body portion 32 may be a squared cylinder. As shown in FIG. 8, FIG. 8 is a structural schematic view of another top view of the camera assembly 30 shown in FIG. 2. In addition, to be noted that, FIG. 7 and FIG. 8 show only some embodiments of the camera module 30 of the present disclosure.

The display screen 40 and the camera module 30 are disposed side by side and spaced apart from each other. As the size of the body portion 32 of the camera module 30 is greater than the size of the lens portion 31, the display screen 40 and the lens portion 31 of the camera module 30 may be disposed side by side and spaced apart from each other, and the display screen 40 may be configured to avoid the body portion 32 of the camera module 30. Alternatively, a thickness of the display screen 40 is less than the thickness of the lens portion 31 of the camera module 30, and the display screen 40 may be disposed between the body portion 32 of the camera module 30 and the transparent cover 10 to avoid the body portion 32 of the camera module 30.

The display screen 40 specifically includes the display region 41 and the non-display region 42. The display region 41 is configured for displaying information. The non-display region 42 is configured close to the lens portion 31 of the camera module 30, and mainly configured for arranging wires. The display region 41 and the non-display region 42 are adjacent to each other, or the display region 41 partially surrounds the non-display region 42. The non-display region 42 of the display 40 may be partially sandwiched between the transparent cover 10 and the body portion 32 to avoid the body portion 32 of the camera module 30, such that the width of the black edge 101 of the screen may be reduced.

The display region 41 and the non-display region 42 may be adjacent to each other, as shown in FIG. 9, which is a structural schematic view of a top view of the display screen 40 shown in FIG. 2. In this case, the electronic device 100 has a full screen that has a narrow bezel, as shown in FIG. 10, which is a structural schematic view of a top view of the electronic device 100 shown in FIG. 2.

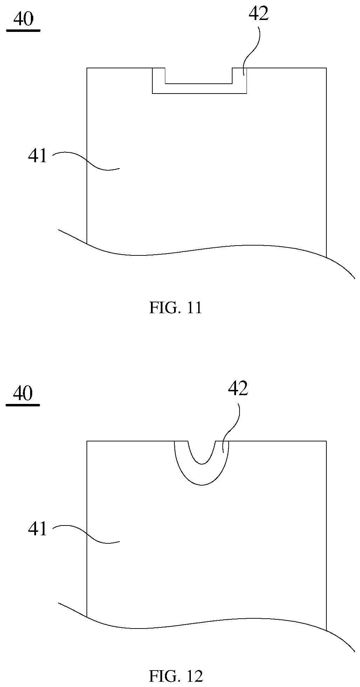

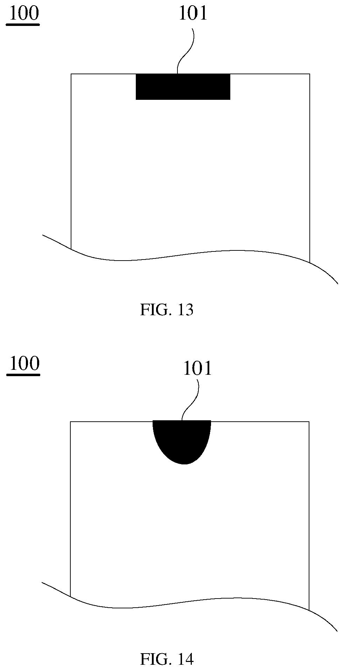

It should be understood that the display region 41 may partially surround the non-display region 42, as shown in FIG. 11 and FIG. 12. FIG. 11 is a structural schematic view of another top view of the display screen 40 shown in FIG. 2, and FIG. 12 is a structural schematic view of another top view of the display screen 40 shown in FIG. 2. In this case, the electronic device 100 has a full screen that has the notch design (as shown in FIG. 13) or the water-drop design (as shown in FIG. 14). As shown in FIG. 13 and FIG. 14, FIG. 13 is a structural schematic view of another top view of the electronic device 100 shown in FIG. 2, and FIG. 14 is a structural schematic view of another top view of the electronic device 100 shown in FIG. 2.

The display screen 40 and the transparent cover 10 are adhered together by an optical adhesive, and there is a certain distance between the display screen 40 and the transparent cover 10. Alternatively, the distance between the display screen 40 and the transparent cover 10 is greater than the thickness of the diaphragm structure 20 to allow the display screen 40 to avoid the diaphragm structure 20. For example, the thickness of the diaphragm structure 20 may be 80um, and the distance between the display screen 40 and the transparent cover 10 may be 100um. Further, a projection of the non-display region 42 on the transparent cover 10 may at least partially overlap with a projection of the diaphragm structure 20 on the transparent cover 10 to reduce the size of the black edge 101 of the screen.

The non-display region 42 includes a first contact face 421, a second contact face 422 opposite to the first contact face 421, and a side face 423 connecting the first contact face 421 and the second contact face 422. The first contact face 421 is configured close to the transparent cover 10. Alternatively, a light-shielding layer 43 is disposed on the side face 423. The light-shielding layer 43 may substantially be configured to block light emitted from the side face 423 of the non-display region 42, preventing the light emitted from the display screen 40 from interfering with the camera module 30. To be noted that, the terms "first", "second" and "third" in the present disclosure are used for descriptive purposes only and shall not be interpreted as indicating or implying relative importance or implicitly specifying the number of described technical feature. Therefore, features limited by the "first," the "second," and the "third" may explicitly or implicitly include at least one such feature.

It should be understood that the light-shielding layer 43 is disposed on the first contact face 421. When the light-shielding layer 43 is disposed on each of the first contact face 421 and the side face 423, light emitted from the first contact face 421 and the side face 423 of the non-display region 42 may be blocked, preventing the light emitted from the display 40 from interfering with the camera module 30 more effectively. Material of the light-shielding layer 43 may be an adhesive, such as a black adhesive or a black screen-printing ink layer. The present disclosure does not limit the material of the light-shielding layer 43. When the material of the light-shielding layer 43 is an adhesive layer, the light-shielding layer 43 may be formed by coating glue. When the material of the light-shielding layer 43 is the screen-printing ink layer, the light-shielding layer 43 may be formed by screen printing. Detailed principle of the screen printing is described in the above, and will not be repeated hereinafter.

To be noted that, when the light-shielding layer 43 is disposed on the first contact face 421, on one hand, the light-shielding layer 43 cannot block the display region 41 of the display screen 40 to avoid affecting displaying of the display screen 40, and on the other hand, the light-shielding layer 43 cannot block the light-transmitting hole 21 of the diaphragm structure 20 to avoid affecting an imaging effect of the camera module 30.

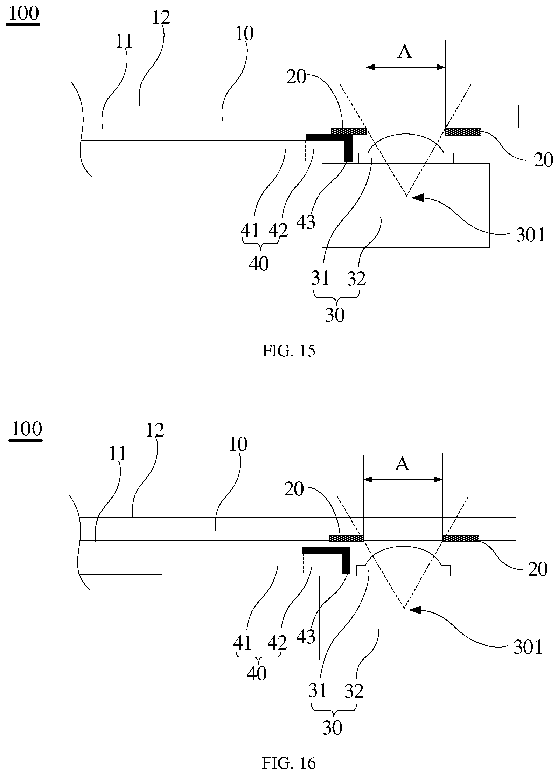

As shown in FIG. 15, FIG. 15 is a structural schematic view of another electronic device 100 according to an embodiment of the present disclosure. The electronic device 100 includes the transparent cover 10, a diaphragm sheet 20 and the camera module 30. The transparent cover 10 includes the first surface 11 and the second surface 12 opposite to the first surface 11. The diaphragm sheet 20 is disposed on the first surface 11 of the transparent cover 10, and defines the light-transmitting hole 21. The camera module 30 and the diaphragm sheet 20 are disposed on the same side of the transparent cover 10. The camera module 30 is disposed corresponding to the light-transmitting hole 21. The diaphragm sheet 20 is configured to limit the range of the light entering the camera module 30. The light passes through the transparent cover 10 and the light-transmitting hole 21 successively to further enter the camera module 30.

In an aspect, the diaphragm sheet 20 is configured on the transparent cover 10 of the electronic device 100, serving as the diaphragm of the camera module 30, such that the thickness of the camera module 30 may be reduced, and the distance between the principal point of photograph 301 of the camera module 30 and the transparent cover 10 may be reduced. As the diaphragm sheet 20 is disposed on the transparent cover 10, when the field of view angle of the camera module 30 (the angle between the principal point of photograph 301 and the diameter of the field of view) remains unchanged, the diameter of the field of view may be reduced, and the diameter of the field of view is equal to the diameter A of the hole of the light-transmitting region. Therefore, the diameter A of the hole of the t light-transmitting region is reduced, the width of the black edge 101 of the screen is reduced, and the screen-to-body ratio is increased. In another aspect, disposing the diaphragm sheet 20 on the transparent cover 10 to serve as the diaphragm of the camera module 30 may reduce the width of the camera module 30, such that the width of the black edge 101 of the screen may be reduced, and the screen-to-body ratio may be increased.

The diaphragm sheet 20 in FIG. 15 may be a black plastic sheet or a ceramic sheet.

When the diaphragm sheet 20 in FIG. 15 is the black plastic sheet or the ceramic sheet, the diaphragm sheet 20 is an independent component. A process of forming the diaphragm sheet 20 will be illustrated as an example, where the diaphragm sheet 20 is the black plastic sheet. The diaphragm sheet 20 may be processed by an injection molding process. The injection molding process refers to performing pressurizing, injecting, cooling, and detaching on melted raw material to form a semi-finished product that has a certain shape.

As shown in FIG. 16, FIG. 16 is a structural schematic view of another electronic device 100 according to an embodiment of the present disclosure. Compared to the electronic device 100 in FIG. 15, in the electronic device 100 in FIG. 16, the first surface 11 of the transparent cover 10 defines a sink 13, and the diaphragm sheet 20 is received in the sink 13.

By receiving the diaphragm sheet 20 in the sink 13 defined in the transparent cover 10, the distance between the camera module 30 and the transparent cover 10 may be reduced, and the distance between the principal point of photograph 301 of the camera module 30 and the transparent cover 10 may be reduced accordingly. As the diaphragm sheet 20 is disposed on the transparent cover 10, when the field of view angle (the angle between the principal point of photograph 301 and the diameter of the field of view) of the camera module 30 remains unchanged, the diameter of the field of view may be reduced, and the diameter of the field of view is equal to the diameter A of the hole of the light-transmitting region. Therefore, the diameter A of the hole of the light-transmitting region may be reduced, the width of the black edge 101 of the screen may be reduced, and the screen-to-body ratio may be increased.

In detail, the present disclosure does not limit the shape of the sink 13, as long as the shape of the sink 13 fits a shape of the diaphragm sheet 20. For example, when the diaphragm sheet 20 is a ring-shaped sheet, the sink 13 may be a ring-shaped groove. The present disclosure does not limit a depth of the sink 13. The depth of the sink 13 may be determined based on the thickness of the transparent cover 10 and overall rigidity of the transparent cover 10. For example, the depth of the sink 13 may be exactly equal to the thickness of the diaphragm sheet 20 (as shown in FIG. 16), alternatively, the depth of the sink 13 may be greater than the thickness of the diaphragm sheet 20, and alternatively, the depth of the sink 13 may be less than the thickness of the diaphragm sheet 20. In the following, a method of manufacturing the transparent cover 10 will be described by taking the ring-shaped sink as an example.

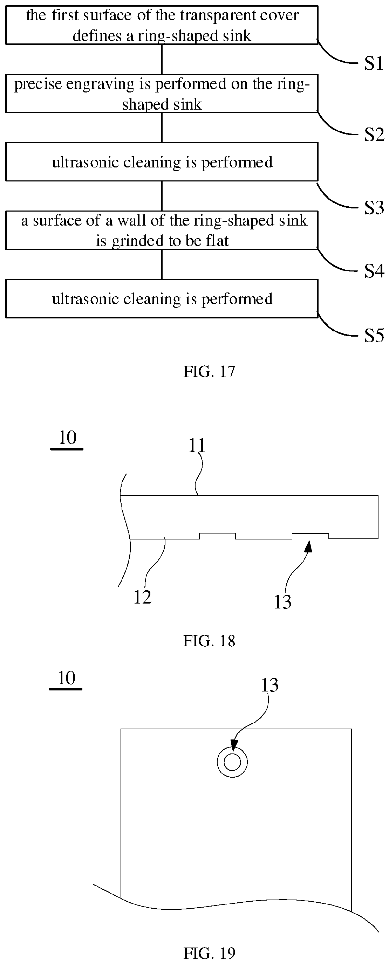

As shown in FIG. 17, FIG. 17 is a flow chart of manufacturing the transparent cover 10 plate shown in FIG. 16. Defining the sink 13 includes the following operations.

In an operation S1, the first surface 11 of the transparent cover 10 defines a ring-shaped sink. Alternatively, a computerized numerical control (CNC) engraving machine is applied to engrave the ring-shaped sink on the first surface 11 of the transparent cover 10.

In an operation S2, precise engraving is performed on the ring-shaped sink. Alternatively, the CNC engraving machine is applied to engrave the sink precisely.

In an operation S3, ultrasonic cleaning is performed.

In an operation S4, a surface of a wall of the ring-shaped sink is grinded to be flat.

In an operation S5, ultrasonic cleaning is performed.

After performing the above operations, a detailed structure of the transparent cover 10 is shown in FIG. 18 and FIG. 19. FIG. 18 is structural schematic view of the transparent cover 10 shown in FIG. 16. FIG. 19 is structural schematic view of a top view of the transparent cover 10 shown in FIG. 16.

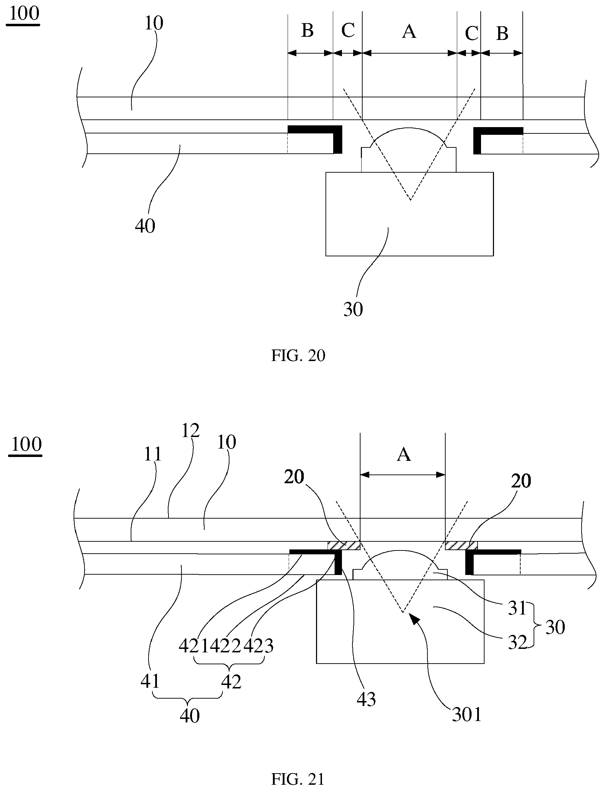

To be noted that, the electronic device 100, which has the full-screen structure having a hole design, will be illustrated in the following. During long-term research, the applicant discovers that the black edge 101 of the full-screen with the hole is mainly formed by the diameter A of the hole in the light-transmitting region, the width of the wiring B (about 1 mm) in the display screen 40, and the distance C (about 0.15mm × 2mm) between the display screen 40 and the camera for assembly, as shown in FIG. 20, which is a structural schematic view of an electronic device according to another embodiment in the art.

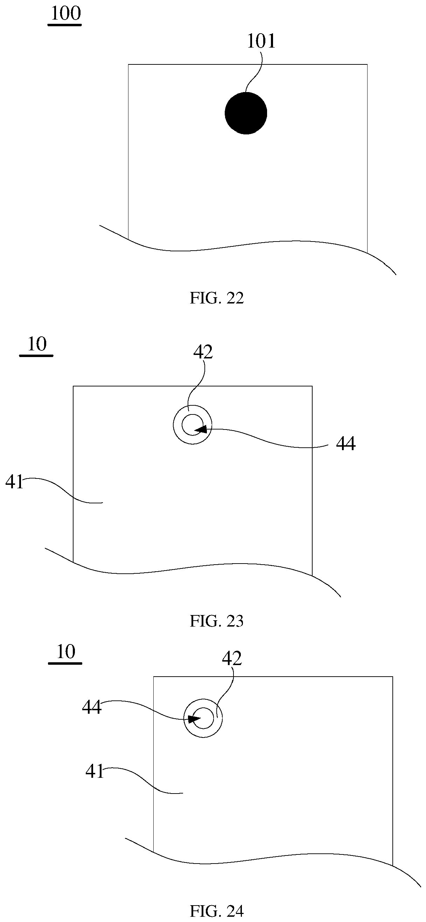

As shown in FIG. 21 and FIG. 22, FIG. 21 is a structural schematic view of another electronic device 100 according to an embodiment of the present disclosure, and FIG. 22 is structural schematic view of a top view of the electronic device 100 shown in FIG. 21. The electronic device 100 includes a transparent cover 10, a diaphragm structure 20, a display screen 40 and a camera module 30. The transparent cover 10 includes a first surface 11 and a second surface 12 opposite to the first surface 11. The diaphragm structure 20 is a screen-printing ink layer disposed on the first surface 11 of the transparent cover 10, and the diaphragm structure 20 defines a light-transmitting hole 21. The display screen 40 and the diaphragm structure 20 are disposed on a same side of the transparent cover 10. The display screen 40 defines a through hole 44. The through hole 44 corresponds to the light-transmitting hole 21, for example, the central axis of the through hole 44 coincides with central axis of the light-transmitting hole 21. The camera module 30 and the diaphragm structure 20 are disposed on a same side of the transparent cover 10. The camera module 30 is disposed corresponding to the light-transmitting hole 21. The diaphragm structure 20 is configured to limit a range of light entering the camera module 30. The light successively passes through the transparent cover 10, the light-transmitting hole 21 and the through hole 44 to enter the camera module 30.

In one aspect, the screen-printing ink layer is disposed on the transparent cover 10 of the electronic device 100, and the screen-printing ink layer serves as the diaphragm structure 20 of the camera module 30. The thickness of the camera module 30 may be reduced, such that a distance between the principal point of photograph 301 of the camera module 30 and the transparent cover 10 may be reduced. As the diaphragm structure 20 is disposed on the transparent cover 10, when the field of view angle (the angle between the principal point of photograph 301 and the diameter of the field of view) of the camera module 30 remains unchanged, the diameter of the field of view is reduced, and the diameter of the field of view is equal to the diameter A of the hole in the light-transmitting region. Therefore, the diameter A of the hole in the light-transmitting region is reduced, the width of the black edge 101 of the screen is reduced, and the screen-to-body ratio is increased. In another aspect, disposing the diaphragm structure 20 on the transparent cover 10 may reduce the width of the camera module 30, such that the width of the black edge 101 of the screen may be reduced, and the screen-to-body ratio may be increased.

The material of the transparent cover 10 may be transparent glass or resin. The first surface 11 of the transparent cover 10 is disposed inside the electronic device 100. The second surface 12 of the transparent cover 10 serves as the outer surface of the electronic device 100, and may be configured to receive the sliding operation of the user.

The diaphragm structure 20 is substantially configured to limit the range of light entering the camera module 30. In related art, the diaphragm structure 20 is a component of the camera module 30 and configured on the camera module 30. In the present embodiment, the diaphragm structure 20 is the screen-printing ink layer disposed on the first surface 11 of the transparent cover 10. Alternatively, the diaphragm structure 20 may be a black screen-printing ink layer. Alternatively, the thickness of the diaphragm structure 20 may be between 80um and 200um. For example, the thickness of the diaphragm structure 20 may be one of 80um, 120um, 150um, 180um, and 200um. When the thickness of the diaphragm structure 20 is excessively thin, the diaphragm structure 20 may not limit the range of the light. When the thickness of the diaphragm structure 20 is excessively thick, a thin electronic device 100 may not be produced. Further, the thickness of the diaphragm structure 20 may be between 80 um and 150um. The shape of the diaphragm structure 20 may be the same as the one in the previous embodiments and will not be repeated herein.

Alternatively, the diaphragm structure 20 is a part of the camera optical system and plays a role in the imaging process. In order to ensure the quality of the imaging process, a difference between the central axis of the light-transmitting hole 21, the central axis of the through hole 44, and the central axis of the lens of the camera module 30 may be less than or equal to 0.005mm. Further, the difference between the central axis of the light-transmitting hole 21, the central axis of the through hole 44, and the central axis of the lens of the camera module 30 may be less than or equal to 0.001mm. Alternatively, the light-transmitting hole 21 and through hole 44 are circular through holes. In order to ensure the quality of the imaging process, a diameter of the light-transmitting hole 21 is less than a diameter of the through hole 44, such that the diaphragm structure 20 can limit the range of light entering the camera module 30. Alternatively, the concentricity of the light-transmitting hole 21 may be less than or equal to 0.005mm. Further, the concentricity of the through hole 21 may be less than or equal to 0.001mm. In this way, the quality of the imaging process may be ensured.

To print and form the diaphragm structure 20, ink may pass through holes in a graphic portion of a screen-printing plate 201, and the ink may not pass through holes in a non-graphic portion of the screen-printing plate 201. A silk screen cloth is taut on a screen frame to form the screen-printing plate 201. While printing, a printing substrate 202 is placed on a printing table 203, and the screen-printing plate 201 is placed on the printing substrate 202. The ink is poured to an end of the screen-printing plate 201. A scraping plate 204 is configured to apply a certain pressure on a position of the screen-printing plate 201 that has the ink, and moves to the other end of the screen-printing plate 201. While moving the scraping plate 204, the scraping plate 204 squeezes the ink onto the printing substrate 202 from the holes of the graphic portion. The working principle of screen printing is described in detail in the previous embodiments, and will not be repeated here.

To be noted that, by improving accuracy of the screen-printing plate 201 and uniformity of the scraping plate 204, accuracy of the diaphragm structure 20 may be improved, and the concentricity of the light-transmitting hole 21 may be improved. In another aspect, a charge-coupled device (CCD) may be configured to align the camera module 30, the display screen 40 and the diaphragm structure 20 to reduce an assembly tolerance between the camera module 30, the display screen 40 and the diaphragm structure 20, improving coincidence between the light axis of the light-transmitting hole 21, the light axis of the through hole 44 and the light axis of the lens of the camera module 30.

The transparent cover 10, the diaphragm structure 20 and the display screen 40 are laminated. The display screen 40 includes a display region 41 and a non-display region 42. The display region 41 is configured for displaying. The non-display region 42 is configured for arranging wires. The display region 41 surrounds the non-display region 42, and the non-display region 42 surrounds the through hole 44. Alternatively, to further reduce the size of the black edge 101 of the screen, the projection of the non-display region 42 on the transparent cover 10 may at least partially overlap with the projection of the diaphragm structure 20 on the transparent cover 10.

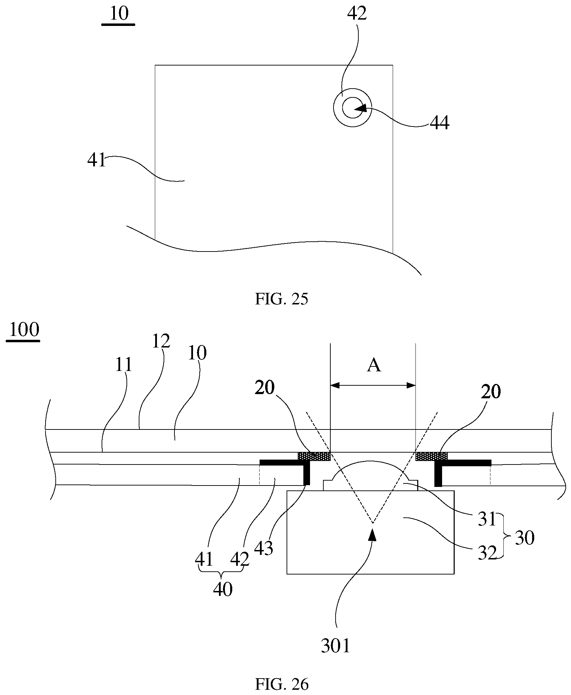

In detail, the non-display region 42 may be configured in a middle-top of the display screen 40, as shown in FIG. 23, which is structural schematic view of a top view of the display screen 40 shown in FIG. 21. The non-display region 42 may be configured on a left-top of the display screen 40, as shown in FIG. 24, which is structural schematic view of another top view of the display screen 40 shown in FIG. 21. The non-display region 42 may be configured on a right-top of the display screen 40, as shown in FIG. 25, which is a structural schematic view of another top view of the display screen 40 shown in FIG. 21. The non-display region 42 may be configured at other positions of the display screen 40, which will not be listed one-by-one herein.

The non-display region 42 includes a first contact face 421, a second contact face 422 opposite to the first contact face 421, and a side face 423 connecting the first contact face 421 and the second contact face 422. The first contact face 421 is disposed close to the transparent cover 10. Alternatively, a light-shielding layer 43 may be disposed on the side face 423. The light-shielding layer 43 is substantially configured to block light emitted from the side face 423 of the non-display region 42, preventing the light emitted from the display screen 40 from interfering with the camera module 30.

It shall be understood that the light-shielding layer 43 may further be disposed on the first contact face 421. When both the first contact face 421 and the side face 423 are configured with the light-shielding layer 43, the light emitted from the first contact face 421 and the side face 423 of the non-display region 42 may be blocked, such that interference with the camera module 30 caused by the light emitted from the display screen 40 may further be prevented. The light-shielding layer 43 may be an adhesive layer, such as a black adhesive or a black screen-printing ink layer. The present disclosure does not limit the material of the light-shielding layer 43. When the light-shielding layer 43 is the adhesive layer, the light-shielding layer 43 may be formed by coating glue. When the light-shielding layer 43 is the screen-printing ink layer, the light-shielding layer 43 may be formed by screen printing. Detailed principle of the screen printing is described in the above, and will not be repeated hereinafter.

To be noted that, when the light-shielding layer 43 is disposed on the first contact face 421, on one hand, the light-shielding layer 43 cannot block the display region 41 of the display screen 40, such that the display of the display screen 40 may not be affected; and on the other hand, the light-shielding layer 43 cannot block the light-transmitting hole 21 on the diaphragm structure 20, such that the imaging effect of the camera module 30 may not be affected.

The camera module 30 is disposed corresponding to the light-transmitting hole 21 of the diaphragm structure 20 and the through hole 44 of the display screen 40, and the lens of the camera module 30 may be disposed close to the diaphragm structure 20 as much as possible. Alternatively, the camera module 30 may be partially received in the through hole 44. The camera module 30 may be a fixed-focus camera module or an auto-focusing camera module. Alternatively, in the present embodiment, the camera module 30 is the fixed-focus camera module. To be noted that when the camera module 30 is the auto-focusing camera module (the body portion 32 drives the lens portion 31 to extend and retract in a direction perpendicular to a thickness direction of the transparent cover 10), the body portion 32 needs to avoid the display screen 40.

In the present embodiment, the camera module 30 is a small-head camera. In detail, the camera module 30 may include the lens portion 31 and the body portion 32. The lens portion 31 is disposed close to the diaphragm structure 20, and the body portion 32 supports the lens portion 31. Further, a size of the lens portion 31 is smaller than a size of the body portion 32. Alternatively, the size of the lens portion 31 is smaller than a size of the through hole 44 of the display screen 40, and the size of the body portion 32 is greater than the size of the through hole 44 of the display screen 40. The lens portion 31 is received in the through hole 44 in the display screen 40 to minimize the distance between the camera module 30 and the diaphragm structure 20, reducing the diameter A of the hole of the light-transmitting region and the width of the black edge 101 of the screen. Further, the projection of the non-display region 42 on the transparent cover 10 at least partially overlaps with the projection of the body part 32 on the transparent cover 10, further reducing the width of the black edge 101 of the screen.

The size of the lens portion 31 of the camera module 30 is smaller than the size of the lens portion 31 of the camera module 30 in the related art. This is because, in the present embodiment, the diaphragm structure 20 is disposed on the transparent cover 10. In the art, the diaphragm structure 20 may be configured as a part of the camera module 30 and provided on the camera module 30. Disposing the diaphragm structure 20 on the transparent cover 10 may reduce a thickness and a width of the lens portion 31 of the camera module 30.

Alternatively, detailed optical parameters of the camera module 30 may be as follows. An optical size of an image sensor (cmos sensor) may be 1/2.8 inch. A field of view angle may be 80 degrees. An aperture value may be 2.2. The thickness of the lens (a total length of the lens, TTL) may be 4.55 mm. The lens portion 31 of the camera module 30 may be a circular cylinder, having a diameter of less than 3 mm. To be noted that, in the related art, the diameter of the lens portion 31 of the camera module 30 may generally be greater than 3mm. More features of the camera module 30 may be the same as those illustrated in the previous embodiments, which will not be repeated herein.

As shown in FIG. 26, FIG. 26 is a structural schematic view of another electronic device according to an embodiment of the present disclosure. The electronic device 100 includes a transparent cover 10, a diaphragm sheet 20, a display screen 40 and a camera module 30. The transparent cover 10 include a first surface 11 and a second surface 12 opposite to the first surface 11. The diaphragm 20 is disposed on the first surface 11 of the transparent cover 10. The diaphragm sheet 20 defines a light-transmitting hole 21. The display screen 40 and the diaphragm sheet 20 are disposed on a same side of the transparent cover 10. The display screen 40 defines a through hole 44. The through hole 44 corresponds to the light-transmitting hole 21, for example, the central axis of the through hole coincides with the central axis of the light-transmitting hole 21. The camera module 30 and the diaphragm sheet 20 are disposed on a same side of the transparent cover 10. The camera module 30 is disposed corresponding to the light-transmitting hole. The diaphragm sheet 20 is configured to limit the range of light entering the camera module 30. The light successively passes through the transparent cover 10, the light-transmitting hole 21 and the through hole 44 to further enter the camera module 30.

In an aspect, the diaphragm sheet 20 is configured on the transparent cover 10 of the electronic device 100, serving as the diaphragm of the camera module 30, such that the thickness of the camera module 30 may be reduced, and the distance between the principal point of photograph 301 of the camera module 30 and the transparent cover 10 may be reduced. As the diaphragm sheet 20 is disposed on the transparent cover 10, when the field of view angle of the camera module 30 (the angle between the principal point of photograph 301 and the diameter of the field of view) remains unchanged, the diameter of the field of view may be reduced, and the diameter of the field of view is equal to the diameter A of the hole of the light-transmitting region. Therefore, the diameter A of the hole of the light-transmitting region is reduced, the width of the black edge 101 of the screen is reduced, and the screen-to-body ratio is increased. In another aspect, disposing the diaphragm sheet 20 on the transparent cover 10 to serve as the diaphragm of the camera module 30 may reduce the width of the camera module 30, such that the width of the black edge 101 of the screen may be reduced, and the screen-to-body ratio may be increased.

Compared to the electronic device 100 in FIG. 21, the electronic device 100 in FIG. 26 may have following features.

The diaphragm sheet 20 in FIG. 26 may be black plastic or a ceramic sheet.

The diaphragm sheet 20 in FIG. 26 is an independent component. In the present embodiment, a process of forming the diaphragm sheet 20 will be illustrated where the diaphragm 20 is the black plastic. The diaphragm sheet 20 may be obtained by performing an injection molding process. The injection molding process refers to a process of performing operations of pressing, injecting, cooling and detaching on melt raw material to obtain a semi-finished product in a certain shape.

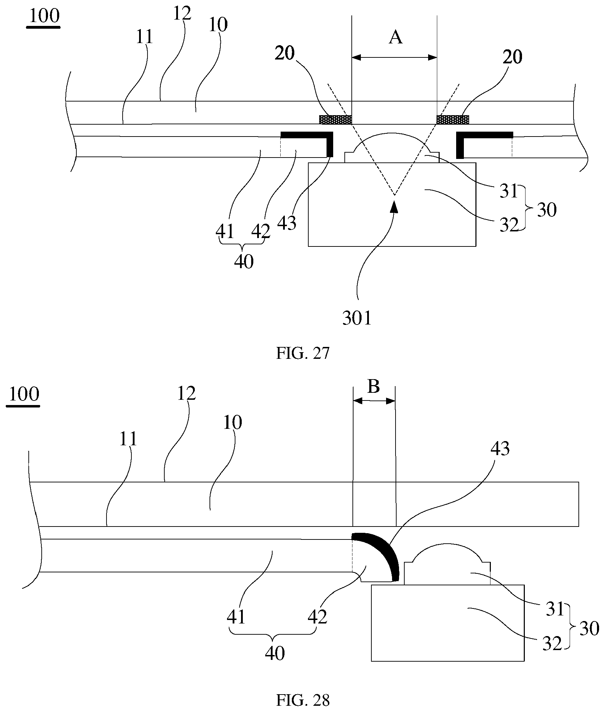

As shown in FIG. 27, FIG. 27 is a structural schematic view of another electronic device 100 according to an embodiment of the present disclosure. Compared to the electronic device 100 in FIG. 26, the first surface 11 of the transparent cover 10 of the electronic device 100 in FIG. 27 defines a sink 13, and the diaphragm sheet 20 is received in the sink 13.

The transparent cover 10 defines the sink 13, and the diaphragm sheet 20 is received in the sink 13. Therefore, a distance between the camera module 30 and the transparent cover 10 is reduced, and a distance between the principal point of photograph 301 of the camera module 30 and the transparent cover 10 is reduced accordingly. As the diaphragm sheet 20 is disposed on the transparent cover 10, when the field of view angle of the camera module 30 (the angle between the principal point of photograph 301 and the diameter of the field of view) remains unchanged, the diameter of the field of view may be reduced, and the diameter of the field of view is equal to the diameter A of the hole of the light-transmitting region. Therefore, the diameter A of the hole of the light-transmitting region is reduced, the width of the black edge 101 of the screen is reduced, and the screen-to-body ratio is increased.

In detail, the present disclosure does not limit a specific shape of the sink 13, as long as the shape of the sink 13 allows the diaphragm sheet 20 to be fit in. For example, when the diaphragm sheet 20 is ring-shaped, the sink 13 is ring-shaped. The present disclosure does not limit a depth of the sink 13. The depth of the sink 13 may be determined based on the thickness of the transparent cover 10 and overall strength of the transparent cover 10. For example, the depth of the sink 13 may be exactly equal to the thickness of the diaphragm sheet 20 (as shown in FIG. 27); alternatively, the depth of the sink 13 may be greater than the thickness of the diaphragm sheet 20; and alternatively, the depth of the sink 13 may also be less than the thickness of the diaphragm sheet 20. A method of forming the sink 13 may be the same as the method in the previous embodiments. Detailed description is provided in the previous embodiments, and will not be repeated here.

Further, an electronic device 100 having a reduced width for arranging wires will be illustrated.

As shown in FIG. 28, FIG. 28 is a structural schematic view of another electronic device 100 according to an embodiment of the present disclosure. The electronic device 100 includes a display screen 40, a camera module 30 and a transparent cover 10. The display screen 40 includes a display region 41 and a non-display region 42. The display region 41 may be adjacent to the non-display region 42. Alternatively, the display region 41 may partially surround the non-display region 42. The non-display region 42 may be curved. The camera module 30 is provided adjacent to the non-display region 42. The camera module 30 includes a lens portion 31 and a body portion 32. The transparent cover 10 includes a first surface 11 and a second surface 12 opposite to the first surface 11. The display screen 40 and the camera module 30 are disposed on a side of the transparent cover 10 near the first surface 11. A projection of the body portion 32 on the transparent cover 10 at least partially overlaps with a projection of the non-display region 42 on the transparent cover 10.

The non-display region 42 of the display screen 40 of the electronic device 100 is configured to be curved. In this way, the width B for wiring of the display screen 40 may be reduced, such that the width of the black edge 101 of the screen may be reduced, and the screen-to-body ratio may be increased.

Material of the transparent cover 10 may be transparent glass or resin. The camera module 30 is disposed on a side of the transparent cover 10. Alternatively, a distance between the camera module 30 and the transparent cover 10 may be as short as possible. The camera module 30 may be a fixed-focus camera module or an auto-focusing camera module. Alternatively, in the present embodiment, the camera module 30 is the fixed-focus camera module. It should be noted that, when the camera module 30 is the auto-focusing camera module (the body portion 32 drives the lens portion 31 to extend and retract in a direction perpendicular to the transparent cover 10), the body portion 32 needs to avoid the display screen 40.

In the present embodiment, the camera module 30 is a small-head camera. In detail, the camera module 30 may further include the lens portion 31 and the body portion 32. The lens portion 31 is disposed close to the transparent cover 10, and the body portion 32 supports the lens portion 31. Further, a size of the lens portion 31 is less than a size of the body portion 32. Alternatively, detailed optical parameters of the camera module 30 may be as follows. An optical size of an image sensor (cmos sensor) may be 1/2.8 inch. A field of view may be 80 degrees. An aperture value may be 2.2. The thickness of the lens (a total length of the lens, TTL) may be 4.55 mm. For example, each of the lens portion 31 and the body portion 32 may be a circular cylinder. It will be understood that the lens portion 31 may be a circular cylinder, and the body portion 32 may be a squared cylinder. More features of the camera module 30 may be the same as those in the previous embodiment, which has been described in detail hereinbefore and will not be repeated here.

The display screen 40 and the camera module 30 are disposed on a same side of the transparent cover 10. Alternatively, the display screen 40 and the camera module 30 are disposed side by side and spaced apart from each other. As the size of the body portion 32 of the camera module 30 is larger than a size of the lens portion 31, the display screen 40 and the lens part 31 of the camera module 30 can be disposed side by side and spaced apart from each other, and the display screen 40 avoids the body portion 32 of the camera module 30. Alternatively, a thickness of the display screen 40 is less than a thickness of the lens portion 31 of the camera module 30. The display screen 40 may be disposed between the body portion 32 of the camera module 30 and the transparent cover 10 to avoid the body portion 32 of the camera module 30.

The display screen 40 includes the display region 41 and the non-display region 42. The display region 41 is configured for displaying. The non-display region 42 is disposed close to the lens portion 31 of the camera module 30. The non-display region 42 is curved and substantially configured for arranging wires. Alternatively, the display region 41 and the non-display region 42 are disposed adjacent to each other. In this case, the electronic device 100 having the full-screen structure may have a narrow bezel. The display region 41 may partially surround the non-display region 42. In this case, the electronic device 100 may have a full-screen structure having the notch design or the water-drop design. A positional relationship between the display region 41 and the non-display region 42, a structural relationship between the display region 41 and the full-screen structure, and a structural relationship between the non-display region 42 and the full-screen structure may be the same as those in the previous embodiments, which has been described in detail and will not be repeated here.

The non-display region 42 of the display screen 40 is curved. In detail, the non-display region 42 may be bent in a direction away from the transparent cover 10 or in a direction towards the transparent cover 10. In the present embodiment, the non-display region 42 is bent in the direction away from the transparent cover 10 to prevent the distance between the display screen 40 and the transparent cover 10 from being excessively large. Alternatively, an end face of the non-display region 42 of the display screen 40 abuts against the body portion 32 of the camera module 30 to minimize the width of the black edge 101 of the screen. Further, a side of the non-display region 42 of the display screen 40 facing the transparent cover 10 is configured with a light-shielding layer 43. The light-shielding layer 43 is substantially configured for blocking the light emitted from the non-display region 42 towards the side of the transparent cover 10, preventing the light emitted from the display screen 40 from interfering with the camera module 30.

Material of the light-shielding layer 43 may be an adhesive layer, such as black adhesive, or a black screen-printing ink layer. The material of the light-shielding layer 43 is not limited by the present disclosure. When the material of the light-shielding layer 43 is the adhesive layer, the light-shielding layer 43 may be formed by coating glue. When the material of the light-shielding layer 43 is the screen-printing ink layer, the light-shielding layer 43 may be formed by screen printing. Specific principle of the screen printing is explained in detail in the above embodiments, and will not be repeated here. To be noted that, the light-shielding layer 43 cannot block the display region 41 of the display screen 40, such that the display of the display screen 40 may not be affected.

To be noted that, the technical solution to reduce the width B for arranging wires of the display screen 40 in the present embodiment may be combined with the technical solution to reduce the diameter of the hole in the light-transmission region in previous embodiments to further reduce the width of the black edge 101 of the screen.

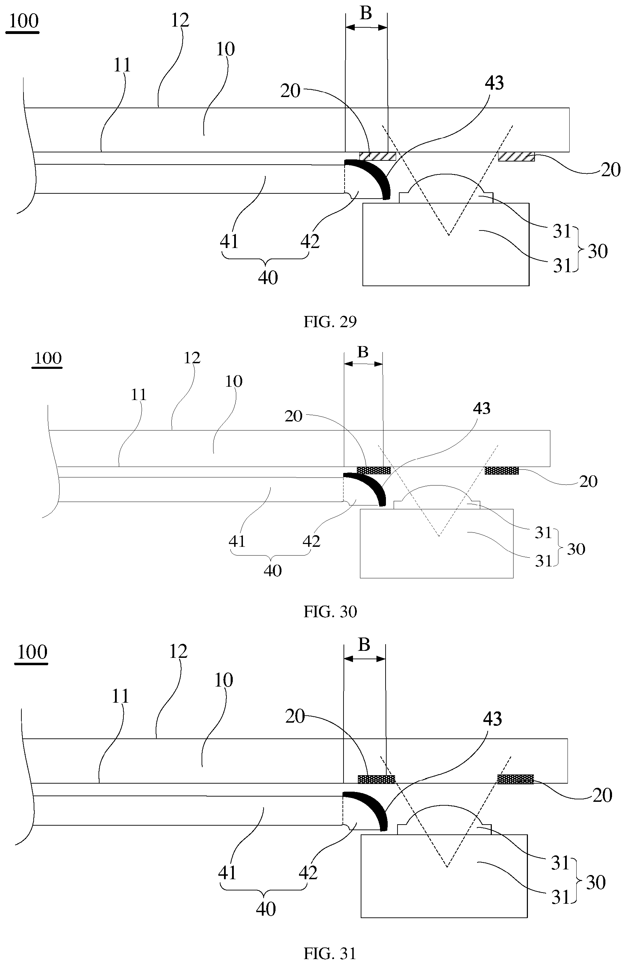

For example, the embodiment in FIG. 28 can be combined with the embodiment in FIG. 2, as shown in FIG. 29, FIG. 29 is a structural schematic view of another electronic device 100 according to an embodiment of the present disclosure. The diaphragm structure 20 of the camera module 30 is disposed on the transparent cover 10. The diaphragm structure 20 is a ring-shaped ink layer coated on the first surface 11 of the transparent cover 10. The lens of the camera module 30 is disposed facing a transparent hole in a center of the ring-shaped ink layer. More detailed features of the electronic device 100 in FIG. 29 have been described in the previous embodiments and will not be repeated here.

In addition, the embodiment in FIG. 28 can be combined with the embodiment in FIG. 15, as shown in FIG. 30, FIG. 30 is a structural schematic view of another electronic device 100 according to an embodiment of the present disclosure. The diaphragm structure 20 of the camera module 30 is disposed on the transparent cover 10. The diaphragm structure 20 is a ring-shaped non-transparent sheet adhered to the first surface 11 of the transparent cover 10. The lens of the camera module 30 is disposed facing the transparent hole at a center of the ring-shaped non-transparent sheet. Alternatively, the ring-shaped non-transparent sheet is made of black plastic or is a ceramic sheet. More detailed features of the electronic device 100 in FIG. 30 are described in the previous embodiments, and will not be repeated here.

It shall be understood that, the embodiment in FIG. 28 can also be combined with the embodiment in FIG. 16, as shown in FIG. 31, FIG. 31 is a structural schematic view of another electronic device 100 according to an embodiment of the present disclosure. The diaphragm structure 20 of the camera module 30 is disposed on the transparent cover 10. The first surface 11 of the transparent cover 10 defines the sink 13. The diaphragm structure 20 is a ring-shaped non-transparent sheet adhered in the sink 13. The lens of the camera module 30 is disposed facing the transparent hole at a center of the ring-shaped non-transparent sheet. More detailed features of the electronic device 100 in FIG. 31 are described in the previous embodiments, and will not be repeated here.

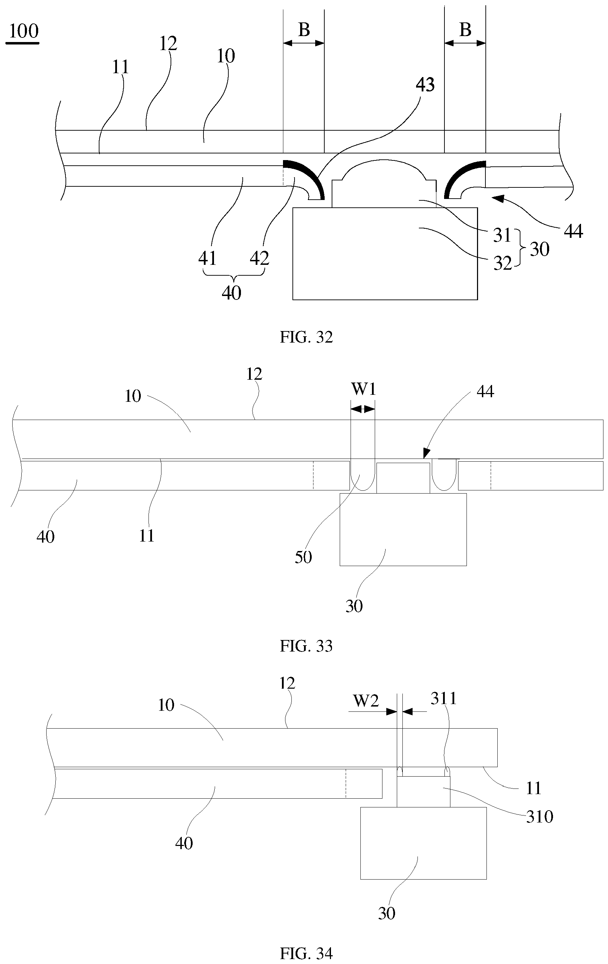

As shown in FIG. 32, FIG. 32 is a structural schematic view of another electronic device 100 according to an embodiment of the present disclosure. For the electronic device 100 in FIG. 32, the display screen 40 defines a through hole 44. The display region 41 surrounds the non-display region 42. The non-display region 42 surrounds the through hole 44. The camera module 30 captures images through the through hole 44.

In detail, the camera module 30 is disposed corresponding to the through hole 44. The distance between the lens of the camera module 30 and the transparent cover 10 is as short as possible. Alternatively, the camera module 30 may be partially received in the through hole 44. In the present embodiment, the camera module 30 is a small-head camera. In detail, the camera module 30 may further include the lens portion 31 and the body portion 32. The lens portion 31 is disposed close to the transparent cover 10, and the body portion 32 supports the lens portion 31. Further, the size of the lens portion 31 is less than the size of the body portion 32. Alternatively, the size of the lens portion 31 is less than the size of the through hole 44 of the display screen 40. The size of the body portion 32 is greater than the size of the through hole 44 of the display screen 40. The lens portion 31 extends into the through hole 44 of the display screen 40 to minimize the distance between the camera module 30 and the transparent cover 10, to reduce the diameter of the hole of the transparent region, and to reduce the width of the black edge 101 of the screen. Further features of the camera module 30 may be the same as those in the previous embodiments and will not be repeated here.

To be noted that, in the present embodiment, the technical solution to reduce the width B for wiring of the display screen 40 in the present embodiment may be combined with the technical solution to reduce the diameter of the hole in the light-transmission region in previous embodiments to further reduce the width of the black edge 101 of the screen. For example, the embodiment in FIG. 32 can be combined with the embodiment in FIG. 21, the embodiment in FIG. 32 can be combined with the embodiment in FIG. 26, and the embodiment in FIG. 32 can be combined with the embodiment in FIG. 27. In addition, all technical features described in the present disclosure (including but not limited to relevant structures for shielding light, relevant structures of the display screen and other structures) may be referenced to or adapted to each other, regardless of being applied in the display screen having the narrow bezel, the display screen having the notch design, the display screen having the waterdrop design, or the display screen having the hole design. The technical features shall not be limited to a particular drawing and or in a particular embodiment.

As shown in FIG. 33, FIG. 33 is a side view of a partial structure of the electronic device according to another embodiment of the present disclosure. In the present embodiment, the electronic device includes a transparent cover 10, a display screen 40, a camera module 30 and a light-shielding adhesive frame 50.

In detail, the transparent cover 10 includes a first surface 11 and a second surface 12 opposite to the first surface 11. Material of the transparent cover 10 may be glass or transparent resin. The display screen 40 is adhered to the first surface 11 of the transparent cover 10. The display screen 40 defines a through hole 44. The second surface 12 of the transparent cover 10 serves as an outer surface of the electronic device for contacting the user and receiving sliding operations performed by the user.

Alternatively, the camera module 30 and the display screen 40 are disposed on a same side of the transparent cover 10. The camera module 30 is disposed corresponding to the through hole 44 of the display screen 40. The lens of the camera module 30 faces towards the first surface 11 of the transparent cover 10. The light successively passes through the transparent cover 10 and the through hole 44 to further enter the camera module 30. The light-shielding adhesive frame 50 is disposed on an inner circumference of the through hole 44 of the display screen 40, i.e. the light-shielding adhesive frame 50 is ring-shaped. The light-shielding adhesive frame 50 is disposed between the display screen 40 and the camera module 30 and is adhered to the first surface 11 of the transparent cover 10. In the present embodiment, a width W1 of the light-shielding adhesive frame 50 is less than or equal to 0.3 mm. The light-shielding adhesive frame 50 is configured to block the light emitted by the display screen 40 in order to prevent the light emitted by the display screen 40 from interfering with the camera module 30.

Alternatively, the width W1 of the light-shielding adhesive frame 50 may be in a range of 0.1mm to 0.3mm, and further in a range of 0.1mm to 0.2mm. As a reliable and practical product embodiment, the width W1 of the light-shielding adhesive frame 50 in the present disclosure may be 0.15 mm. Alternatively, the light-shielding adhesive frame 50 in the present embodiment is formed by means of dispensing. In detail, the transparent cover 10 is provided firstly. Subsequently, the display screen 40 is adhered to the first surface 11 of the transparent cover 10. In the present embodiment, the display screen 40 defines the through hole 44. The display screen 40 may be adhered to the first surface 11 of the transparent cover 10 by glue. Further, a dispensing jig is disposed on the first surface 11 of the transparent cover 10. The dispensing jig may be in a structure of a block (material is not limited) or a foam adhered to the first surface 11 of the transparent cover 10. The dispensing jig is received in the through hole 44 of the display screen 40. A ring-shaped dispensing gap is defined between the inner circumference of the first through hole 44 and the dispensing jig. Preferably, the ring-shaped dispensing gap has a uniform width. Therefore, a contour shape of the dispensing jig is required to be the same as that of the through hole 44. In the present embodiment, the contour shape is circular. Disposing the dispensing jig may be achieved by a CCD camera, the CCD camera may grip and align the dispensing jig to the through hole 44 of the display screen 40, and adheres the dispensing jig to the first surface 11 of the transparent cover 10 corresponding to the through hole 44.

Alternatively, the width of the dispensing gap may be adjusted based on a shielding requirement and adhesive strength of the glue. For example, the width of the dispensing gap may be one of 0.3mm, 0.25mm, 0.2mm or 0.1mm. The dispensing gap is filled with glue 401. The glue 401 may be black glue. After the glue 401 is cured, the dispensing jig is removed, and the light-shielding adhesive frame 50 is formed. The light-shielding adhesive frame 50 may be disposed to abut against an inner wall of the through hole 44 of the display screen 40. As the light-shielding adhesive frame 50 is formed by dispensing glue in the ring-shaped dispensing gap, the dispensing jig is removed after the glue 401 is dispensed and cured. In this way, the width of the light-shielding adhesive frame 50 may be the same as the width of the ring-shaped dispensing gap, and the light-shielding adhesive frame 50 in a size of 0.3mm or less is obtained.

As shown in FIG. 34, FIG. 34 is a side view of a partial structure of the electronic device according to still another embodiment of the present disclosure. The electronic device includes, but is not limited to, the transparent cover 10, the display screen 40 and the camera module 30. An area of the display screen 40 is less than an area of the first surface 11 of the transparent cover 10. That is, the narrow bezel is taken as an example for illustration.

Alternatively, the camera module 30 and the display screen 40 are disposed on a same side of said transparent cover 10. The camera module 30 and the display screen 40 are disposed side by side and spaced apart from each other. The lens of the camera module 30 faces the first surface 11 of the transparent cover 10. An end portion of a lens barrel 310 of the camera module 30 is configured with a ring-shaped light-shielding member 311. The light-shielding member 311 abuts against the first surface 11 of the transparent cover 10. The light-shielding member 311 is configured to block the light emitted by the display screen 40 in order to prevent the light emitted by the display screen 40 from interfering with the camera module 30.

Alternatively, the light-shielding member 311 is disposed along an edge of the end portion of the lens barrel 310. The light-shielding member 311 and the lens barrel 310 an integral and overall structure that are in two colors and formed by injection molding. Material of the light-shielding member 311 is soft rubber, and in detail, may be liquid silicone or TPU, and the like. A width W2 of the light-shielding member 311 may be in a range of 0.1mm to 0.5mm, and further, may be in a range of 0.1mm to 0.3mm. Alternatively, the width W2 of the light-shielding member 311 in the present disclosure may be 0.1mm or 0.2mm. Compression deformation of the light-shielding member 30 caused by the light-shielding member 30 abutting against the first surface 11 is in a range of 0.05mm to 0.1mm. The compression deformation is dimensional deformation of the light-shielding member 311 in a direction perpendicular to the first surface 11, i.e., a pre-interference amount between the light-shielding member 311 and the transparent cover 10 when the camera module 30 is assembled to the electronic device. The pre-interference amount ensures the light-shielding member 311 to be compressed tightly or to reliably abut against the first surface 11 of the transparent cover 10.

In the electronic device of the present embodiment, the light-shielding member 311 is integrally disposed on the end portion of the lens barrel 310 of the camera module 30, such that the width of the black edge may be reduced by more than 0.5mm. This structure allows the distance between the camera module 30 and the display screen 40 to be reduced, such that the black edge of the entire electronic device may be reduced, and the screen-to-body ratio of the entire electronic device may be improved.

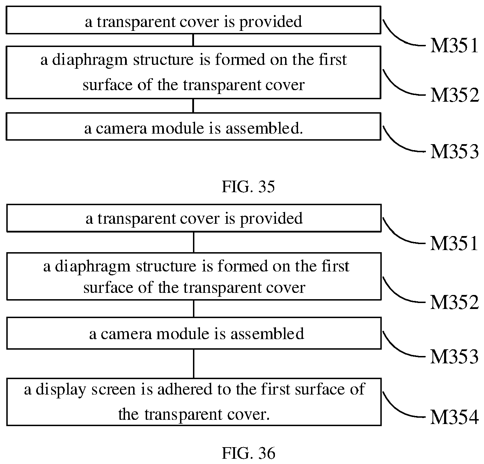

The present disclosure further provides a method of assembling an electronic device, as shown in FIG. 35, FIG. 35 is a flow chart of a method for assembling an electronic device according to an embodiment of the present disclosure. The method includes, but is not limited to, the following operations.

In an operation M351, a transparent cover is provided.

The transparent cover includes a first surface and a second surface opposite to the first surface.

In an operation M352, a diaphragm structure is formed on the first surface of the transparent cover.

The diaphragm structure defines a light-transmitting hole. In detail, screen printing is performed on the first surface of the transparent cover to form a ring-shaped ink layer. Alternatively, a ring-shaped diaphragm sheet is adhered to the first surface of the transparent cover. Structural features of this portion may be referred to the description of relevant embodiments in the above.

In an operation M353, a camera module is assembled.

In the operation M353, a light inlet hole of the camera module is defined corresponding to the light-transmitting hole of the diaphragm structure, for example, a central axis of the light inlet hole coincides with a central axis of the light-transmitting hole.

Further, as shown in FIG. 36, FIG. 36 is a flow chart of a method for assembling an electronic device according to another embodiment of the present disclosure. Compared to the previous embodiment, the method in the present embodiment further includes an operation M354, a display screen is adhered to the first surface of the transparent cover. The operation may be performed either before or after the operation M353 (assembling the camera module). A sequence of performing the operations are limited by the present disclosure. A structure of the assembled electronic device is referred to the embodiments shown in the above FIG. 2, FIG. 21, FIG. 27 and the like, and will not be repeated here.

According to the method of assembling the electronic device provided by the present embodiment, the diaphragm is disposed on the transparent cover, such that the size of lens portion of the camera is reduced, and the display screen may be closer to the edge of the electronic device (i.e. closer to the lens of the camera module). In this way, the electronic device has a narrow bezel (or a black circle of the hole in the screen is reduced), the screen-to-body ratio of the electronic device is increased, and the electronic device may be more competitive in the market.

## Claims

1. An electronic device, comprising:
a transparent cover (10), comprising a first surface (11) and a second surface (12) opposite to the first surface (11);
a display screen (40), comprising a display region (41) and a non-display region (42) adjacent to the display region (41), wherein the non-display region (42) comprises a first contact face (421), a second contact face (422) opposite to the first contact face (421), and a side face (423) connecting the first contact face (421) and the second contact face (422), the first contact face (421) is disposed close to the transparent cover (10); and
a camera module (30);
wherein the electronic device is **characterized in that** the electronic device further comprises: a screen-printing ink layer, serving as a diaphragm structure (20), disposed on the first surface (11) of the transparent cover (10) and defining a light-transmitting hole (21);
wherein the camera module (30) and the diaphragm structure (20) are disposed on a same side of the transparent cover (10);
the diaphragm structure (20) is configured to limit a diameter of a field of view of the camera module (30), the light is capable of passing through the transparent cover (10) and the light-transmitting hole (21) to further enter the camera module (30);
a light-shielding layer (43) is disposed on each of the side face (423) and the first contact face (421); and
a distance between the display screen (40) and the transparent cover (10) is greater than a thickness of the diaphragm structure (20), and the display screen (40) is arranged to avoid the diaphragm structure (20).

2. The electronic device according to claim 1, wherein the thickness of the diaphragm structure (20) is in a range of 80um to 200um.

3. The electronic device according to claim 1, wherein the diaphragm structure (20) is a ring-shaped diaphragm sheet adhered to the first surface (11) of the transparent cover (10).

4. The electronic device according to claim 3, wherein the ring-shaped diaphragm sheet is a black plastic sheet or a ceramic sheet.

5. The electronic device according to claim 3, wherein the first surface (11) of the transparent cover (10) defines a sink (13), and the ring-shaped diaphragm sheet is received in the sink (13).

6. The electronic device according to claim 1, wherein the light-shielding layer (43) is an adhesive layer or a screen-printing ink layer.

7. The electronic device according to claim 1, wherein
a light-shielding adhesive frame (50) is disposed between the display screen (40) and the camera module (30) and is adhered to the first surface (11) of the transparent cover (10), a width of the light-shielding adhesive frame (50) is less than or equal to 0.3 mm; and
the light-shielding adhesive frame (50) is configured to block light emitted by the display screen (40).

8. The electronic device according to claim 1, wherein
a camera module (30) comprises a lens portion (31) and a body portion (32), the lens portion (31) faces the first surface (11) of the transparent cover (10);
an end portion of the lens portion (31) facing the transparent cover (10) is configured with a ring-shaped light-shielding member (311), the light-shielding member (311) abuts against the first surface (11) of the transparent cover (10); and
the light-shielding member (311) is configured to block the light emitted by the display screen (40).

9. The electronic device according to claim 8, wherein the light-shielding member (311) and a lens barrel (310) is an integral and overall structure that are in two colors; and material of the light-shielding member (311) is soft rubber.

10. The electronic device according to claim 9, wherein compression deformation of the light-shielding member (311) generated by the light-shielding member (311) abutting against the first surface (11) is in a range of 0.05mm to 0.1mm; and the compression deformation is dimensional deformation of the light-shielding member (311) in a direction perpendicular to the first surface (11).

11. The electronic device according to claim 1, wherein a projection of the non-display region (42) on the transparent cover (10) at least partially overlaps with a projection of the camera module (30) on the transparent cover (10).

12. The electronic device according to claim 1, wherein a projection of the non-display region (42) on the transparent cover (10) at least partially overlaps with a projection of the diaphragm structure (20) on the transparent cover (10).

13. The electronic device according to claim 1, wherein a difference between a central axis of the light-transmitting hole (21) and a central axis of a lens of the camera module (30) is less than 0.005mm; and concentricity of the light-transmitting is less than 0.001mm.

## Patentansprüche

1. Elektronisches Gerät, umfassend:
eine transparente Abdeckung (10), die eine erste Oberfläche (11) und eine zweite Oberfläche (12) gegenüber der ersten Oberfläche (11) umfasst;
einen Anzeigebildschirm (40), der einen Anzeigebereich (41) und einen Nichtanzeigebereich (42), der dem Anzeigebereich (41) benachbart ist, umfasst, wobei der Nichtanzeigebereich (42) eine erste Kontaktfläche (421), eine zweite Kontaktfläche (422) gegenüber der ersten Kontaktfläche (421) und eine Seitenfläche (423), welche die erste Kontaktfläche (421) und die zweite Kontaktfläche (422) verbindet, umfasst, wobei die erste Kontaktfläche (421) nahe der transparenten Abdeckung (10) angeordnet ist; und
ein Kameramodul (30);
wobei das elektronische Gerät **dadurch gekennzeichnet ist, dass** das elektronische Gerät ferner Folgendes umfasst: eine Siebdruckfarbenschicht, die als eine Membranstruktur (20) dient, auf der ersten Oberfläche (11) der transparenten Abdeckung (10) angeordnet ist und ein Lichtdurchlassloch (21) definiert;
wobei das Kameramodul (30) und die Membranstruktur (20) auf derselben Seite der transparenten Abdeckung (10) angeordnet sind;
die Membranstruktur (20) dazu ausgestaltet ist, einen Durchmesser eines Sichtfelds des Kameramoduls (30) zu begrenzen, wobei das Licht in der Lage ist, die transparente Abdeckung (10) und das Lichtdurchlassloch (21) zu passieren, um dann in das Kameramodul (30) einzutreten;
eine Lichtabschirmschicht (43) auf jeder aus der Seitenfläche (423) und der ersten Kontaktfläche (421) angeordnet ist; und
ein Abstand zwischen dem Anzeigebildschirm (40) und der transparenten Abdeckung (10) größer ist als eine Dicke der Membranstruktur (20) und der Anzeigebildschirm (40) die Membranstruktur (20) umgehend angeordnet ist.

2. Elektronisches Gerät nach Anspruch 1, wobei die Dicke der Membranstruktur (20) in einem Bereich von 80 um bis 200 um liegt.

3. Elektronisches Gerät nach Anspruch 1, wobei die Membranstruktur (20) eine ringförmige flächige Membran ist, die an die erste Oberfläche (11) der transparenten Abdeckung (10) geklebt ist.

4. Elektronisches Gerät nach Anspruch 3, wobei die ringförmige flächige Membran eine schwarze Kunststoffplatte oder eine Keramikplatte ist.

5. Elektronisches Gerät nach Anspruch 3, wobei die erste Oberfläche (11) der transparenten Abdeckung (10) eine Einsenkung (13) definiert und die ringförmige flächige Membran in der Einsenkung (13) aufgenommen ist.

6. Elektronisches Gerät nach Anspruch 1, wobei die Lichtabschirmschicht (43) eine Klebeschicht oder eine Siebdruckfarbenschicht ist.

7. Elektronisches Gerät nach Anspruch 1, wobei
ein lichtabschirmender Kleberahmen (50) zwischen dem Anzeigebildschirm (40) und dem Kameramodul (30) angeordnet ist und an die erste Oberfläche (11) der transparenten Abdeckung (10) geklebt ist, wobei eine Breite des lichtabschirmenden Kleberahmens (50) kleiner als oder gleich 0,3 mm ist; und
der lichtabschirmende Kleberahmen (50) dazu ausgestaltet ist, durch den Anzeigebildschirm (40) ausgestrahltes Licht zu blockieren.

8. Elektronisches Gerät nach Anspruch 1, wobei
ein Kameramodul (30) einen Linsenabschnitt (31) und einen Körperabschnitt (32) umfasst, wobei der Linsenabschnitt (31) der ersten Oberfläche (11) der transparenten Abdeckung (10) zugewandt ist;
ein Endabschnitt des Linsenabschnitts (31), welcher der transparenten Abdeckung (10) zugewandt ist, mit einem ringförmigen Lichtabschirmelement (311) ausgestaltet ist, wobei das Lichtabschirmelement (311) an der ersten Oberfläche (11) der transparenten Abdeckung (10) anliegt; und
das Lichtabschirmelement (311) dazu ausgestaltet ist, das durch den Anzeigebildschirm (40) ausgestrahlte Licht zu blockieren.

9. Elektronisches Gerät nach Anspruch 8, wobei das Lichtabschirmelement (311) und ein Linsentubus (310) eine einstückige Gesamtstruktur sind, die in zwei Farben vorliegt; und das Material des Lichtabschirmelements (311) Weichgummi ist.

10. Elektronisches Gerät nach Anspruch 9, wobei eine Druckverformung des Lichtabschirmelements (311), die durch das Anliegen des Lichtabschirmelements (311) an der ersten Oberfläche (11) erzeugt wird, in einem Bereich von 0,05 mm bis 0,1 mm liegt; und die Druckverformung eine Verformung der Abmessung des Lichtabschirmelements (311) in einer Richtung senkrecht zu der ersten Oberfläche (11) ist.

11. Elektronisches Gerät nach Anspruch 1, wobei ein Vorsprung des Nichtanzeigebereichs (42) auf der transparenten Abdeckung (10) sich wenigstens teilweise mit einem Vorsprung des Kameramoduls (30) auf der transparenten Abdeckung (10) überlappt.

12. Elektronisches Gerät nach Anspruch 1, wobei ein Vorsprung des Nichtanzeigebereichs (42) auf der transparenten Abdeckung (10) sich wenigstens teilweise mit einem Vorsprung der Membranstruktur (20) auf der transparenten Abdeckung (10) überlappt.

13. Elektronisches Gerät nach Anspruch 1, wobei eine Abweichung zwischen einer Mittelachse des Lichtdurchlasslochs (21) und einer Mittelachse einer Linse des Kameramoduls (30) weniger als 0,005 mm beträgt; und eine Konzentrizität des Lichtdurchlass weniger als 0,001 mm beträgt.

## Revendications

1. Dispositif électronique comprenant :
un couvercle transparent (10), comprenant une première surface (11) et une seconde surface (12) opposée à la première surface (11) ;
un écran d'affichage (40), comprenant une région d'affichage (41) et une région de non-affichage (42) adjacente à la région d'affichage (41), dans lequel la région de non-affichage (42) comprend une première face de contact (421), une seconde face de contact (422) opposée à la première face de contact (421) et une face latérale (423) reliant la première face de contact (421) et la seconde face de contact (422), la première face de contact (421) étant disposée à proximité du couvercle transparent (10) ; et
un module de caméra (30) ;
dans lequel le dispositif électronique est **caractérisé en ce que** le dispositif électronique comprend en outre :
une couche d'encre de sérigraphie, servant de structure de diaphragme (20), disposée sur la première surface (11) du couvercle transparent (10) et définissant un trou de transmission de la lumière (21) ;
dans lequel le module de caméra (30) et la structure de diaphragme (20) sont disposés d'un même côté du couvercle transparent (10) ;
la structure de diaphragme (20) est configurée pour limiter un diamètre du champ de vision du module de caméra (30), la lumière peut passer à travers le couvercle transparent (10) et le trou de transmission de la lumière (21) pour ensuite pénétrer dans le module de caméra (30) ;
une couche de protection contre la lumière (43) est disposée sur chacune des faces latérales (423) et de la première face de contact (421) ; et
une distance entre l'écran d'affichage (40) et le couvercle transparent (10) est supérieure à une épaisseur de la structure de diaphragme (20), et l'écran d'affichage (40) est agencé de manière à éviter la structure de diaphragme (20).

2. Dispositif électronique selon la revendication 1, dans lequel l'épaisseur de la structure de diaphragme (20) est comprise entre 80um et 200um.

3. Dispositif électronique selon la revendication 1, dans lequel la structure de diaphragme (20) est une feuille de diaphragme annulaire collée à la première surface (11) du couvercle transparent (10).

4. Dispositif électronique selon la revendication 3, dans lequel la feuille de diaphragme annulaire est une feuille de plastique noire ou une feuille de céramique.

5. Dispositif électronique selon la revendication 3, dans lequel la première surface (11) du couvercle transparent (10) définit un puits (13), et la feuille de diaphragme annulaire est reçue dans le puits (13).

6. Dispositif électronique selon la revendication 1, dans lequel la couche de protection contre la lumière (43) est une couche adhésive ou une couche d'encre de sérigraphie.

7. Dispositif électronique selon la revendication 1, dans lequel
un cadre adhésif de protection contre la lumière (50) est disposé entre l'écran d'affichage (40) et le module de caméra (30) et est collé à la première surface (11) du couvercle transparent (10), une largeur du cadre adhésif de protection contre la lumière (50) étant inférieure ou égale à 0,3 mm ; et
le cadre adhésif de protection contre la lumière (50) est configuré pour occulter la lumière émise par l'écran d'affichage (40).

8. Dispositif électronique selon la revendication 1, dans lequel
un module de caméra (30) comprend une partie formant objectif (31) et une partie formant corps (32), la partie formant objectif (31) faisant face à la première surface (11) du couvercle transparent (10) ;
une partie d'extrémité de la partie formant objectif (31) faisant face au couvercle transparent (10) est configurée de façon à comporter un élément de protection contre la lumière (311) annulaire, l'élément de protection contre la lumière (311) venant en butée contre la première surface (11) du couvercle transparent (10) ; et
l'élément de protection contre la lumière (311) est configuré de façon à occulter la lumière émise par l'écran d'affichage (40).

9. Dispositif électronique selon la revendication 8, dans lequel l'élément de protection contre la lumière (311) et un barillet d'objectif (310) constituent une structure intégrale et globale en deux couleurs ; et le matériau de l'élément de protection contre la lumière (311) est un caoutchouc souple.

10. Dispositif électronique selon la revendication 9, dans lequel la déformation par compression de l'élément de protection contre la lumière (311) générée par l'élément de protection contre la lumière (311) en butée contre la première surface (11) est comprise entre 0,05 mm et 0,1 mm ; et
la déformation par compression est une déformation dimensionnelle de l'élément de protection contre la lumière (311) dans une direction perpendiculaire à la première surface (11).

11. Dispositif électronique selon la revendication 1, dans lequel une partie saillante de la région de non-affichage (42) sur le couvercle transparent (10) chevauche au moins partiellement une partie saillante du module de caméra (30) sur le couvercle transparent (10).

12. Dispositif électronique selon la revendication 1, dans lequel une partie saillante de la région de non-affichage (42) sur le couvercle transparent (10) chevauche au moins partiellement une partie saillante de la structure du diaphragme (20) sur le couvercle transparent (10).

13. Dispositif électronique selon la revendication 1, dans lequel la différence entre l'axe central du trou de transmission de la lumière (21) et l'axe central d'un objectif du module de caméra (30) est inférieure à 0,005 mm ; et la concentricité de la transmission de lumière est inférieure à 0,001 mm.
